# EUROPÄISCHE PATENTSCHRIFT

(11) **EP 3 794 945 B1**
(45) Veröffentlichungstag und Bekanntmachung des Hinweises auf die Patenterteilung: **15.05.2024**
(21) Anmeldenummer: 20178221.6
(22) Anmeldetag: 04.06.2020
(51) Int. Cl.: A21C 13/00

(54) **VERFAHREN ZUM GÄREN VON BACKWAREN**
PROCESS FOR PROOFING BAKERY PRODUCTS
PROCÉDÉ POUR LA FERMENTATION DES PRODUITS DE BOULANGERIE

(30) Priorität: 23.09.2019 DE 102019006662
(43) Veröffentlichungstag der Anmeldung: 24.03.2021
(73) Patentinhaber: Brinker, Karl, 44629 Herne Nordrhein-Westfalen (DE)
(72) Erfinder: Brinker, Karl, 44629 Herne Nordrhein-Westfalen (DE)
(74) Vertreter: Schneiders & Behrendt Bochum

(56) Entgegenhaltungen:
- EP-A1- 3 320 779
- EP-A2- 0 791 295
- DE-A1- 3 544 738
- FR-A1- 2 653 304
- GB-A- 246 302
- JP-B2- 2 925 896
- US-A- 4 610 886

## Beschreibung

Die Erfindung betrifft die Verwendung eines Regals zum Lagern von Backwaren in übereinander angeordneten Ebenen.

Es ist bekannt, unterschiedlichste Backwaren in Regalen zu lagern, um die Backwaren danach einer Weiterverarbeitung zuzuführen.

Aus der DE 35 44 738 A1 ist es bekannt, Backwaren auf Tabletts in einem Regal zu lagern. Ferner ist es aus der EP 0 791 295 A2 und FR 2 653 304 A1 bekannt, Teigprodukte nach dem Gären einzufrieren. Aufgabe der Erfindung ist es, einem Backwaren aufnehmenden Lagerregal eine weitere Verwendung zu geben und den Gärverlauf und die Gärergebnisse zu verbessern.

Diese Aufgabe wird erfindungsgemäß dadurch gelöst, dass
- die Backwaren Tiefkühl-Teiglinge sind und tablettförmige Paletten verwendet werden, auf denen die Teiglinge liegen und die vor einer Tiefkühlung zum Gären in die Ebenen eingeschoben werden,

wobei die jeweils neu eingeschobene Palette die bereits in der Ebene befindlichen Paletten weiterschiebt, und mehr oder weniger Regalebenen genutzt werden, und
wobei die Regalebenen unterschiedliche Durchlaufzeiten aufweisen, um verschiedene Gärgrade zu erzeugen.

Hierdurch wird es möglich, im selben Teiglinge aufnehmenden Lagerregal in den jeweiligen Ebenen bzw. Etagen unterschiedliche Gärgrade bei den Teiglingen durchzuführen, die danach tiefgekühlt werden. Vom nicht gegärten grünen Teigling, über 30 und 60 Minuten Vorgären bis 120, 180 und mehr Minuten Vorgären sind alle Gärgrade im selben Regal erreichbar, und dies zur gleichen Zeit, mit exakt wiederholbaren Gärerfolgen und sogar mit Gärunterbrechungen.

Die einzelnen Ebenen/Etagen des Regals sind frei wählbar, wobei in den jeweiligen Ebenen/Etagen unterschiedliche Gärgrade erreichbar sind. Hierbei ist ein einfacher technischer Aufbau des Regals möglich, ohne ein Fließband oder eine Paternoster-Konstruktion. Die mit Teiglingen belegten, tablettförmigen Paletten werden in die jeweilige Ebene/Etage des Regals geschoben, wobei die jeweils neu eingeschobene Palette die bereits in der Ebene befindlichen Paletten weiterschiebt.

Eine besonders einfache Handhabung und Konstruktion ist auch dadurch gegeben, dass der Grad des Gärens der Tiefkühl-Teiglinge durch die Aufenthaltsdauer in der jeweiligen Ebene des Regals erfolgt. Dazu werden mehr oder weniger Regalebenen genutzt, wobei die Regalebenen unterschiedliche Durchlaufzeiten aufweisen, um verschiedene Gärgrade zu erzeugen.

Ausführungsbeispiele der Erfindung werden im Folgenden näher beschrieben.

Für die Herstellung von Tiefkühl-Teiglingen wird ein Teig aus Weizen-und/oder Roggenmehl, Wasser, Salz, Hefe und Backmitteln wie Emulgatoren und/oder Malz durch Mischen und Kneten erstellt. Der Teig wird lang gestreckt und es werden einzelne Teiglinge abgestochen. Nach einer Entspannphase werden die Teiglinge auf tablettförmige Paletten gelegt. Vorzugsweise liegen auf einer Palette ca. 30 Teiglinge.

Die belegten Paletten werden in ein Lagerregal geschoben, das mehrere übereinander angeordnete, waagerechte Ebenen, bzw. Etagen aufweist. Beim Einschieben einer neuen belegten Palette in eine der Etagen werden die bereits in dieser Etage liegenden, belegten Paletten weitergeschoben, so dass ein zusätzlicher Antrieb innerhalb der Etagen bzw. Ebenen nicht erforderlich ist.

Der Grad des Gärens innerhalb der Ebenen wird bestimmt durch die Länge der Ebene, durch die Temperatur und den Luft-Feuchtigkeitsgrad innerhalb der jeweiligen Schrankebene und durch die Zeitdauer, innerhalb der eine Palette sich innerhalb einer Ebene aufhält.

Wird das Gären bei niedrigen Temperaturen durchgeführt, so liegen die Temperaturen bei 18 bis 30 Grad Celsius. Werden höhere Temperaturen für das Gären gewählt, so betragen diese 25 bis 40 Grad Celsius.

Die mit Teiglingen belegten Paletten durchlaufen die Schrankebenen mit 4 bis 8 Minuten je nach dem gewünschten Grad der Gare bei einer Luftfeuchtigkeit von 65 bis 90%. Hierbei kann die Regalebene eine erste Teilstrecke mit niedriger Temperatur und eine darauffolgende zweite Teilstrecke mit höherer Temperatur aufweisen.

## Patentansprüche

1. Verwendung eines Regals zum Lagern von Backwaren mit übereinander angeordneten Ebenen, **dadurch**
**gekennzeichnet, dass**
a. die Backwaren Tiefkühl-Teiglinge sind und dass tablettförmige Paletten verwendet werden, auf denen die Teiglinge liegen und die vor einer Tiefkühlung zum Gären in die Ebenen eingeschoben werden, und
b. wobei die jeweils neu eingeschobene Palette die bereits in der Ebene befindlichen Paletten weiterschiebt, und
c. mehr oder weniger Regalebenen genutzt werden, wobei die Regalebenen unterschiedliche Durchlaufzeiten aufweisen, um verschiedene Gärgrade zu erzeugen.

2. Verwendung eines Regals nach Anspruch 1, **dadurch**
**gekennzeichnet, dass** der Grad des Gärens der Tiefkühl-Teiglinge durch die Aufenthaltsdauer in der jeweiligen Ebene des Regals erfolgt.

3. Verwendung eines Regals nach einem der vorherigen Ansprüche,
**dadurch gekennzeichnet, dass** die Regalebenen eine erste Teilstrecke mit niedriger Temperatur und eine darauffolgende zweite Teilstrecke mit höherer Temperatur aufweisen.

## Claims

1. Use of a shelf for storing baked goods with levels arranged one above the other,
**characterized in that**
a. the baked goods are deep-frozen dough pieces and that tray-shaped pallets are used on which the dough pieces are placed and which are inserted into the levels for fermentation before deep-freezing, and
b. whereby the newly inserted pallet each pushes the pallets already on the level, and
c. more or fewer shelf levels are used, whereby the shelf levels have different throughput times in order to produce different degrees of fermentation

2. Use of a shelf according to claim 1, **characterized in that** the degree of fermentation of the deep-frozen dough pieces takes place by the length of stay in the respective level of the shelf.

3. Use of a shelf according to any one of the preceding claims, **characterized in that** the shelf levels have a first section with a low temperature and a subsequent second section with a higher temperature

## Revendications

1. Utilisation d'un rayonnage pour le stockage de produits de boulangerie avec des niveaux superposés,
**caractérisé en ce que**
a. les produits de boulangerie sont des pâtons surgelés et que l'on utilise des palettes en forme de plateau sur lesquelles les pâtons sont posés et qui sont introduites dans les niveaux avant une surgélation pour la fermentation, et
b. la nouvelle palette introduite à chaque fois fait avancer les palettes se trouvant déjà dans le niveau, et
c. on utilise plus ou moins de niveaux de rayonnage, les niveaux de rayonnage présentant des temps de passage différents afin de produire différents degrés de fermentation.

2. Utilisation d'un rayonnage selon la revendication 1, **caractérisée en ce que** le degré de fermentation des pâtons surgelés est déterminé par la durée de séjour dans chaque niveau du rayonnage.

3. Utilisation d'une rayonnage selon l'une des revendications précédentes, **caractérisée en ce que** les niveaux du rayonnage présentent une première section à basse température et une deuxième section suivante à température plus élevée.
